# EUROPÄISCHE PATENTANMELDUNG

(11) **EP 4 260 967 A1**
(43) Veröffentlichungstag der Anmeldung: **18.10.2023**
(21) Anmeldenummer: 23158161.2
(22) Anmeldetag: 23.02.2023
(51) Int. Cl.: B23B 1/00, B23B 35/00, B23Q 15/16, B23B 25/06, B23B 29/14, G05B 19/404

(54) **VERFAHREN ZUR KRAFTGESTEUERTEN SELBSTSCHÄRFUNG MINDESTENS EINES SCHNEIDEELEMENTS EINES BEARBEITUNGSWERKZEUGS UND BEARBEITUNGSWERKZEUG**

(30) Priorität: 11.04.2022 DE 102022108782
(71) Anmelder: GBZ Mannheim GmbH & Co. KG, 67227 Frankenthal (DE)
(72) Erfinder: Sauer, Konstantin, 09111 Chemnitz (DE); Grieser, Sascha, 67227 Frankenthal (DE)
(74) Vertreter: Hamel, Armin

(57) **Zusammenfassung**

Vorrichtung und Verfahren zur kraftgesteuerten Selbstschärfung eines Schneidelements (3) eines Bearbeitungswerkzeugs (2).

## Beschreibung

Die Erfindung betrifft ein Verfahren zur kraftgesteuerten Selbstschärfung eines Schneidelements eines Bearbeitungswerkzeugs nach den Merkmalen des Patentanspruchs 1.

Bearbeitungswerkzeuge werden dazu eingesetzt, ein Werkstück zu bearbeiten. Ein typisches Beispiel einer solchen Fertigungstechnik ist das Zerspanen. Mit dieser Fertigungstechnik wird einem Werkstück eine bestimmte geometrische Form gegeben, indem von dem Werkstück, zum Beispiel Rohrteilen, überschüssiges Material auf mechanischem Weg in Form von Spänen abgetrennt wird. Dazu weist das Bearbeitungswerkzeug mindestens ein Schneidelement auf, mit dem das überschüssige Material entfernt wird. Problematisch ist dabei, dass nach einiger Zeit die Schneidkante des Schneidelements durch Verschleiß seine Mikrogeometrie ändert (umgangssprachlich: das Schneidelement wird stumpf), so dass mit diesem Schneidelement kein Material mehr von dem Werkstück entfernt werden kann. Das Schneidelement wird dann typischerweise durch ein neues Schneidelement ersetzt. Deshalb wäre es vorteilhaft, wenn die Standzeit des Schneidelements verlängert werden könnte.

Aufgabe der vorliegenden Erfindung ist es deshalb, ein Verfahren bereitzustellen, aufgrund dessen es nicht mehr erforderlich ist, ein Schneidelement eines Bearbeitungswerkzeugs auszutauschen, sobald eine Schneidkante dieses Schneidelements verschlissen ist.

Diese Aufgabe wird durch ein Verfahren nach den Merkmalen des Patentanspruchs 1 gelöst.

Es wird somit ein Verfahren zur kraftgesteuerten Selbstschärfung eines Schneidelements eines Bearbeitungswerkzeugs, insbesondere einer Schneidkante des Schneidelements, beschrieben, das folgende aufeinanderfolgende Schritte umfasst.

In einem ersten Schritt wird ein zu bearbeitendes Werkstück, zum Beispiel eine Platte oder ein Rohr, sowie ein Bearbeitungswerkzeug bereitgestellt, wobei das Bearbeitungswerkzeug mindestens ein Schneidelement mit mindestens einer Schneidkante aufweist, wobei mit der Schneidkante das Werkstück bearbeitet werden kann. In einem zweiten Schritt wird mit dem Bearbeitungswerkzeug das Werkstück bearbeitet, indem mit der Schneidkante des mindestens einen Schneidelements überschüssiges Material abgetrennt wird. Dabei wird das mindestens eine Schneidelement mit seiner Schneidkante entlang einer zu bearbeitenden Oberfläche des Werkstoffs geführt. Mit Fₒ wird eine in der Werkzeugorthogonalebene orthogonal zum Schnittgeschwindigkeitsvektor stehende Kraft bezeichnet, die orthogonal zur Schneidkante des Schneidelements wirkt. Fₒ hängt insbesondere vom Material des Werkstücks ab.

Mit zunehmendem Standweg verschleißt die Schneidkante (Schritt 3). Durch den Verschleiß der Schneidkante nimmt die anfängliche Kraft Fₒ orthogonal zur Schneidkante bzw. zum Schneidelement zu, wodurch eine Spanungsdicke verringert wird. Durch Abnahme der Spanungsdicke wird immer weniger Material vom Werkstück abgetragen. Diese Kraft Fₒ wird ständig durch mindestens einen Sensor in dem Bearbeitungswerkzeug überwacht. Wird eine erhöhte Kraft Fₒ' und damit eine verminderte Spanungsdicke h' erreicht, so verlagert sich auf die Schneideebene, dh., es wird eine neue Schneideebene erhalten, entlang der die Schneidkante geführt wird und von der die Schneidkante von nun an Material abträgt.

Wird eine gegenüber der Kraft Fₒ erhöhte Kraft Fₒ' und damit eine verminderte Spanungsdicke h' erreicht, kann dies durch mindestens einen Sensor des Bearbeitungswerkzeugs erfasst werden. Dabei wurde bereits vor Beginn der Bearbeitung des Werkstücks die Kraft Fₒ' in dem Bearbeitungswerkzeug hinterlegt. Da diese Kraft Fₒ' insbesondere vom Material des zu bearbeitenden Werkstücks abhängt, kann diese Kraft Fₒ' berechnet werden, wenn beispielsweise Art des Materials, die Art der Bearbeitung sowie das Material des Schneidelements bekannt sind.

Bei dem Sensor, der die Kraft Fₒ' erfasst, kann es beispielsweise um ein Drucksensor handeln. Um die Kraft Fₒ' konstant zu halten, steuert das Bearbeitungswerkzeug aktiv entgegen, indem das Bearbeitungswerkzeug das Schneidelement mit einer definierten Kraft F_{g} auf die Oberfläche des Werkstücks presst.

Möglich ist aber auch, auf einen Sensor zu verzichten, wenn ein im Wesentlichen elastisches Bauteil als Aktor vorgesehen ist. Zum Beispiel kann ein Federelement, beispielsweise eine Tellerfeder, ein Metallschaum oder eine andere federnde Struktur als Aktor eingesetzt werden, über die das Schneidelement nachgiebig in dem Bearbeitungswerkzeug angeordnet ist. In diesem Fall wirkt die in der Werkzeugorthogonalebene orthogonal zum Schnittgeschwindigkeitsvektor v_{c} stehende Kraft Fₒ auf den Aktor. Im Falle eines Federelements wird dieses dadurch gestaucht. Sodann wirkt eine Rückstellkraft der Feder gegen die Kraft Fₒ'. Entspricht die Rückstellkraft des Federelements der Kraft Fₒ', zum Beispiel weil das Federelement vollständig gestaucht ist, so wird die Kraft Fₒ' und damit auch die Spanungsdicke h' konstant gehalten. Mit dem Bearbeitungswerkzeug kann also aktiv oder passiv gegen die Kraft Fₒ' entgegengesteuert werden. Die Rückstellkraft des Aktors entspricht somit der Kraft F_{g}.

Weil das Werkstück unter der konstanten Kraft Fₒ' weiter zerspant wird, wird Material mit einer Spanungsdicke h' entfernt, wobei sich die Spannungdicke kontinuierlich an die Schneidkantengeometrie angepasst. Dadurch wird in einem fünften Schritt durch eine abrasive Wirkung des Werkstoffs, und weil stetig die konstante Kraft Fₒ' auf das Schneidelement und dessen Schneidkante wirkt, das Schneidelement (und damit insbesondere die an dem Schneidelement angeordnete Schneidkante) stetig geschärft. Dieser Effekt wird im Folgenden auch Selbstschärfung genannt.

Durch diese Selbstschärfung ist es nicht mehr erforderlich, ein Schneidelement auszutauschen, sobald es stumpf geworden ist, weil es durch den Effekt der Selbstschärfung immer wieder nachgeschärft wird. Das so nachgeschärfte Schneidelement muss erst dann ausgetauscht werden, wenn eine Selbstschärfung nicht mehr möglich ist, weil das Schneidelement nicht mehr genug Material aufweist, das durch Reiben des Schneidelements auf der Oberfläche des Werkstücks abgetragen werden kann. Je nach Art des Schneidelements sowie des Materials des zu bearbeiteten Werkstücks ist es möglich, dass die Schneidkante des Schneidelements kontinuierlich geschärft wird, bevor das Schneidelement ausgetauscht werden muss. Da das Schneidelement nicht jedes Mal ausgetauscht werden muss, sobald das Schneidelement bzw. dessen Schneidkante das erste Mal verschlissen ist, kann das Werkstück länger mit diesem einen Schneidelement bearbeitet werden, was zu einer erheblichen Kostenersparnis führt.

Soll das Bearbeitungswerkzeug aktiv gegen die Kraft Fₒ' gegensteuern, so kann das Bearbeitungswerkzeug mindestens einen Sensor aufweisen. Möglich ist aber auch, dass für den Fall, dass das Bearbeitungswerkzeug mehrere Schneidelemente, zum Beispiel vier oder sechs Schneidelemente, aufweist, jedem dieser Schneidelemente ein Sensor zugeordnet ist. Möglich ist auch, dass das Bearbeitungswerkzeug beispielsweise vier Schneidelemente aufweist, jedoch nur zwei Sensoren besitzt. Mehr als nur ein Sensor kann insbesondere dann erforderlich sein, wenn die Art der Bearbeitung dies erforderlich macht, beispielsweise weil das zu bearbeitende Werkstück sehr komplex aufgebaut ist.

Vorteilhaft bei dem Verfahren ist, dass durch das stetige Schärfen der Schneidkante des Schneidelements die Kraft Fₒ' so lange konstant gehalten wird, bis das Schneidelement nicht mehr genug Material besitzt, um selbst geschärft zu werden. Erst dann muss das Schneidelement durch ein neues, arbeitsscharfes Schneidelement ersetzt werden.

Beschrieben wird auch ein Bearbeitungswerkzeug, mit dem das oben beschriebene Verfahren durchgeführt werden kann.

Ausführungsbeispiele der Erfindung werden im Folgenden anhand von Figuren näher beschrieben. Es zeigen:
- Figur 1: eine schematische Darstellung eines Werkstücks in einer Werkzeugorthogonalebene, das mit einem Bearbeitungswerkzeug bearbeitet wird;
- Figur 2: einen vergrößerten Ausschnitt der in Figur 1 gezeigten Anordnung aus Werkstück und Bearbeitungswerkzeug und
- Figuren 3a, 3b und 3c: einen Effekt einer Selbstschärfung eines Schneidelements eines Bearbeitungswerkzeugs durch Bearbeitung eines Werkstücks.

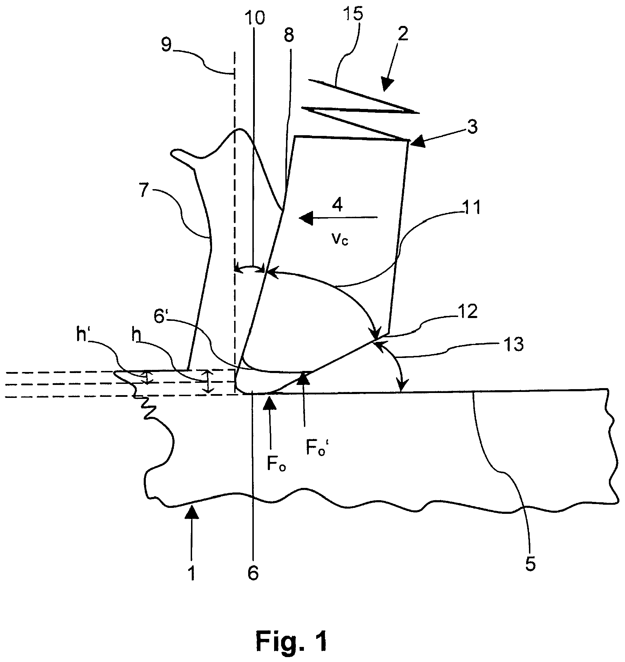

In Figur 1 ist ein Ausschnitt eines Werkstücks 1 dargestellt, das mit einem Bearbeitungswerkzeug 2 bearbeitet wird. Das Bearbeitungswerkzeug 2 ist nur ausschnittsweise dargestellt, so dass in der Figur 1 lediglich das Schneidelement 3 des Bearbeitungswerkzeugs 2 zu sehen ist. Bei dem Werkstück 1 kann es sich beispielsweise um eine Oberfläche eines aus Kunststoff bestehenden Bauteils, wie zum Beispiel eine Platte oder um ein Rohr, handeln.

Das Schneidelement 3 wird mit einer bestimmten Schnittgeschwindigkeit in Richtung 4 (= Bearbeitungsrichtung oder auch Schnittbewegung 4) entlang einer Schneideebene 5 des Werkstücks 1 geführt. Die Schnittgeschwindigkeit in Schnittbewegung 4 entspricht einem Schnittgeschwindigkeitsvektor v_{c}. Das Schneidelement 3 liegt zumindest mit einer Schneidkante 6 an der Schneideebene 5 an und entfernt dabei Material des Werkstücks 1, das als Span 7 bezeichnet wird, wobei der Span 7 über eine Spanfläche 8 des Schneidelements 3 abläuft. Somit spielt es keine Rolle, ob eine Schnittbewegung durch das Bearbeitungswerkzeug 2 (zum Beispiel beim Bohren) oder das Werkstück 1 (zum Beispiel beim Drehen) erzeugt wird.

Zwischen einer Werkzeugbezugsebene 9 und der Spanfläche 8 erstreckt sich ein Spanwinkel 10. An diesen Spanwinkel 10 schließt sich ein Keilwinkel 11 an. Ein Freiwinkel 13 wird durch eine Freifläche 12 des Schneidelements 3 und der Schneideebene 5 definiert.

Ist das Schneidelement 3 erst vor kurzem in dem Bearbeitungswerkzeug 2 eingebracht, so ist die orthogonal zur Schneidkante 6 befindliche Kraft Fₒ klein, weil das Schneidelement 3 noch arbeitsscharf ist. Ist die Kraft Fₒ klein, ist die Spanungsdicke groß. In der Figur 1 ist die Spanungsdicke h bei einem neu in das Bearbeitungswerkzeug 2 eingebrachten, arbeitsscharfen Schneidelement 3 mit einer noch nicht verschlissenen Schneidkante 6 damit groß.

Mit zunehmenden Standweg verschleißt die Schneidkante 6, was durch die Bezugsziffer 6' angedeutet ist. Mit der Bezugsziffer 6' ist somit das Schneidelement 3 mit einer verschlissenen Schneidkante bezeichnet.

Mit dieser verschlissenen Schneidkante 6' erhöht sich die Kraft Fₒ zu einem Wert Fₒ' und es kann weniger Material abgetragen werden, so dass nur noch eine gegenüber der Spanungsdicke h geringere Spanungsdicke h' erreicht werden kann.

Verliert die Schneidkante noch mehr Material, so steigen die Kräfte orthogonal zur Schneidkante ohne eine Änderung der Spanungsdicke an, was zu einer Zerstörung des Schneidelements 3 führen kann, zum Beispiel weil das Schneidelement 3 aufgrund der Kräfte bricht.

Um jedoch die Standzeiten zu erhöhen und dadurch Kosten zu sparen, ist das Schneidelement 3 in dem erfindungsgemäßen Bearbeitungswerkzeug 2 nachgiebig gelagert, indem das Schneidelement 3 an einem Aktor 15 (in Figur 1 nur schematisch dargestellt) angeordnet ist. Unter einem Aktor 15 sind alle Nachgiebigkeitsstrukturen zu verstehen, die der Kraft Fₒ' nachgeben können, zum Beispiel ein Federelement oder ein anderes im Wesentlichen elastisches Bauteil, oder gegen die Kraft Fₒ' aktiv entgegen steuern können, zum Beispiel ein Kolben, der mithilfe eines Mediums bewegt werden kann. Durch das Anbringen des zumindest einen Schneidelements 3 an einem solchen Federelement wird gewährleistet, dass dieses Schneidelement 3 mit der Schneidkante 6 immer mit der Schneideebene des Werkstücks 1 Kontakt hat. Dabei wird durch eine abrasive Wirkung des Materials des Werkstücks 1 die Schneidkante 6 stetig geschärft (im Folgenden auch Selbstschärfung genannt).

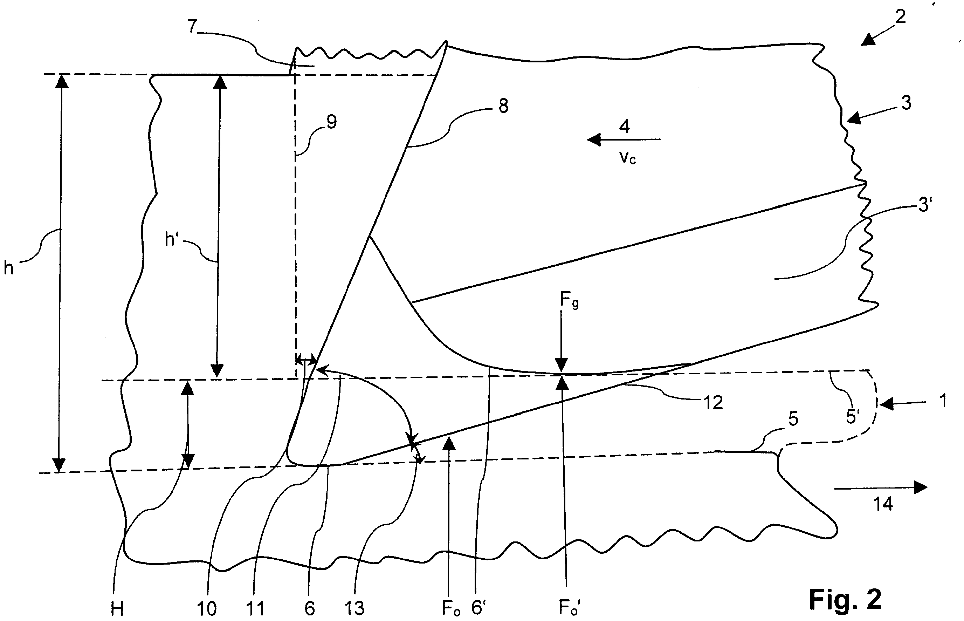

In Figur 2 wird ein vergrößerter Ausschnitt der in Figur 1 gezeigten Anordnung aus Werkstück 1 und Bearbeitungswerkzeug 2 gezeigt, wodurch der Aktor 15 nicht zu sehen ist. Mit der Schneidkante 6 des Schneidelements 3 wird Material in Form von Span 7 von dem Werkstück 1 entfernt.

Das neu in das Bearbeitungswerkzeug 2 eingebrachte Schneidelement 3 liegt mit der arbeitsscharfen Schneidkante 6 an der Schneideebene 5 an. Mit der Schneidkante 6 dieses neu eingesetzten Schneidelements 3 kann Material mit einer Spanungsdicke h entfernt werden. Je mehr die Schneidkante 6 verschleißt, desto weniger Material kann abgetragen werden, so dass die Spanungsdicke kleiner wird, die Kraft Fₒ jedoch zunimmt. Nachdem die Schneidkante 6 des neuen Schneidelements 3 durch Verschleiß Material in einer gewissen Höhe H eingebüßt hat, wird eine verschlissene Schneidkante 6' erhalten. Dadurch, dass die Schneidkante 6 verschlissen ist, liegt die Freifläche 12 nun zumindest teilweise auf einer neuen Schneideebene 5', die in einer Höhe h oberhalb der Schneideebene 5 liegt. Durch den Verschleiß des Schneidelements 3 hat sich somit Schneideebene 5 hin zu einer neuen Schneideebene 5' verlagert.

Mit dieser verschlissenen Schneidkante 6' kann nur noch Material mit einer Spanungsdicke h' vom Werkstück 1 abgetragen werden. Die Spanungsdicke h' ist damit um den Betrag H kleiner als die Spanungsdicke h, die mit einem arbeitsscharfen Schneidelement 3 vom Werkstück 1 abgetragen werden kann.

Durch mindestens einen Sensor, zum Beispiel einen Drucksensor, kann nun erfasst werden, dass die Kraft Fₒ einen in dem Bearbeitungswerkzeug 2 zuvor hinterlegten Wert Fₒ' erreicht hat. Ist die Kraft Fₒ' erreicht worden, so erfolgt eine kraftgesteuerte Anpassung der Spanungsdicke, indem das nachgiebig gelagerte Schneidelement 3 mit einer definierten Kraft F_{g} stetig gegen die neue Schneideebene 5' gedrückt wird. Das Bearbeitungswerkzeug 2 steuert somit mit der Kraft F_{g} der Kraft Fₒ' entgegen, so dass die Kraft Fₒ' konstant gehalten wird. Da sich die Kraft Fₒ' nicht mehr verändert, verschleißt die Schneidkante 6 mit der Zeit, wodurch die Spanungsdicke sinkt. Durch das Sinken der Spanungsdicke schleift sich die Schneidkante wieder scharf, wodurch die Spanungsdicke wieder steigt. Anschließend beginnt der Prozess des Selbstschärfens der Schneidkante 6 wieder von vorne, weil die Schneidkante 6 wieder verschleißt.

Möglich ist aber auch, auf Sensoren zu verzichten, wenn ein Aktor, zum Beispiel ein Federelement, in dem Bearbeitungswerkzeug 2 vorgesehen ist, über den das Schneidelement 3 nachgiebig in dem Bearbeitungswerkzeug 2 angeordnet ist. In diesem Fall wirkt die in der Werkzeugorthogonalebene orthogonal zum Schnittgeschwindigkeitsvektor stehende Kraft Fₒ auf das Federelement, so dass dieses gestaucht wird. Sodann wirkt eine Rückstellkraft des Federelements dieser Kraft entgegen. Mit dem Bearbeitungswerkzeug 2 kann also aktiv oder passiv gegen die Kraft Fₒ' gegengesteuert werden.

Es wird also bei Erreichen der Kraft Fₒ' dafür gesorgt, dass das nachgiebig gelagerte Schneidelement 3 weiterhin Material mit einer Spanungsdicke h' vom Werkstück 1 entfernt wird, und zwar so lange bis die Schneidkante 6 so stark abgenutzt ist, dass das Schneidelement 3 ausgetauscht werden muss.

Da die Schneidkante 6' stetig mit einer konstanten Kraft F_{g} bzw. der Rückstellkraft des Aktors gegen die neue Schneideebene 5' des Werkstücks 1 gedrückt wird, wird die Schneidkante 6' geschärft, weil die Schneidkante 6' und die Freifläche 12 des Schneidelements 3 stetig mit dem Material des Werkstücks 1 in Kontakt stehen. Diese ständige Schärfung (im Folgenden auch kraftgesteuerte Selbstschärfung oder nur Selbstschärfung genannt) der Schneidkante 6' wird durch die abrasive Wirkung des Materials des Werkstücks 1 ermöglicht und dadurch, dass das Schneidelement 3 bei Erreichen einer Kraft Fₒ' mit einer Kraft F_{g} gegen die Schneideebene 5' gepresst wird, wodurch die Kraft Fₒ' konstant gehalten wird. Durch die abrasive Wirkung des Materials des Werkstücks 1 wird aber immer nur ein relativ kleiner, nämlich der untere Abschnitt 3' des Schneidelements 3, abgetragen. Das Abtragen dieses unteren Abschnitts 3' erfolgt kontinuierlich, weil die Kraft Fₒ' konstant gehalten wird.

Ist das Schneidelement 3 so stark abgenutzt, dass es kein Material mehr besitzt, um geschärft zu werden, muss das Schneidelement 3 ausgetauscht werden.

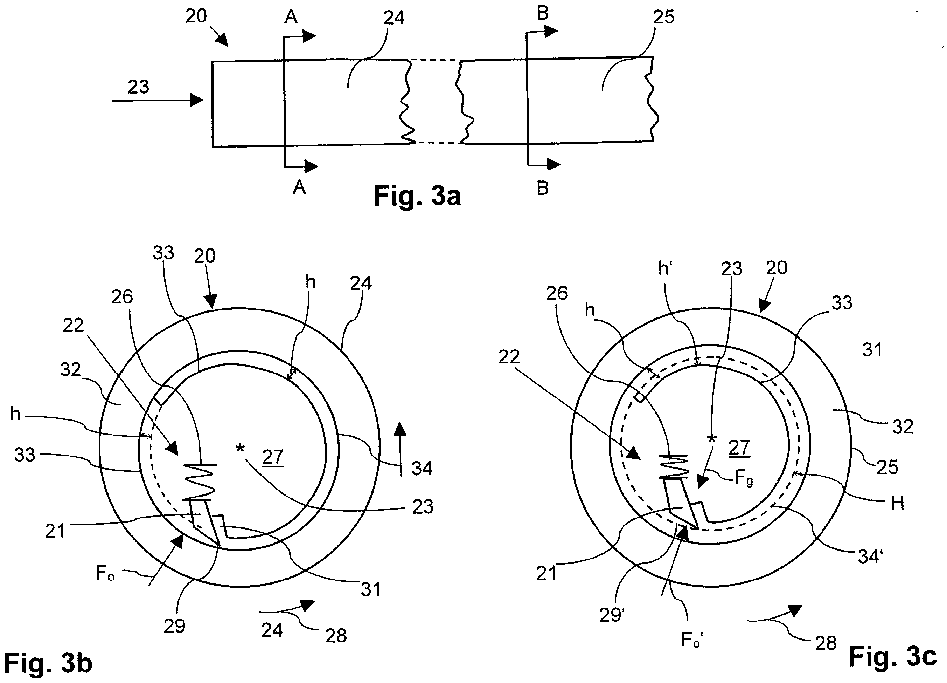

In den Figuren 3a bis 3c wird der Effekt der kraftgesteuerten Selbstschärfung eines Schneidelements 21 eines Bearbeitungswerkzeugs 22 durch Bearbeitung eines Werkstücks 20 dargestellt.

Figur 3a zeigt das zu bearbeitende Werkstück 20, das beispielhaft als Rohr ausgebildet ist, wobei nur zwei Abschnitte 24, 25 dieses Werkstücks 20 dargestellt sind, nämlich ein Anfangsabschnitt 24 sowie ein Mittelabschnitt 25 des Werkstücks 20. Dieses Rohr 20 soll in einem Inneren 27 bearbeitet werden, wobei das Bearbeitungswerkzeug (in Figur 3a nicht dargestellt) in Richtung des Pfeils 23 (= Bearbeitungsrichtung) durch das Werkstück 20 geführt wird.

In Figur 3b ist der Anfangsabschnitt 24 gezeigt, durch den ein Schnitt A-A durchgeführt wurde. Das Bearbeitungswerkzeug 22 mit dem Schneidelement 21 ist nur schematisch dargestellt. Das Schneidelement 21 ist an einem Aktor 26 angeordnet, womit das Schneidelement 21 nachgiebig in dem Bearbeitungswerkzeug 22 gelagert ist. Dieser Aktor 26 ist in den Figuren 3b und 3c als Federelement 26, zum Beispiel als Tellerfeder, ausgebildet. Das Bearbeitungswerkzeug 22 wird in Bearbeitungsrichtung 23 geführt und dabei auch entlang einer Innenwandung 33 des Werkstücks 20 geführt (Drehrichtung 28 des Bearbeitungswerkzeugs 22), um Material abzutragen. Mit der Bezugsziffer 32 ist das Material gekennzeichnet, das nicht vom Bearbeitungswerkzeug 22 abgetragen werden soll.

In dem Anfangsabschnitt 24 des Werkstücks 20 ist das Schneidelement 21 des Bearbeitungswerkzeugs noch neu in das Bearbeitungswerkzeug eingesetzt und deshalb noch nicht verschlissen. Daher wird das Schneidelement 21 mit einer Schneidkante 29 entlang einer Schneideebene 30 des Werkstücks 20 geführt, wobei Material in Form von Span 31 abgetragen wird. Da das Schneidelement 21 bzw. dessen Schneidkante 29 noch nicht verschlissen sind, wird das Material des Werkstücks 20 mit einer maximalen Spanungsdicke h abgetragen. Da die Kraft Fₒ bei einem Schneidelement 21 recht klein ist, ist das Federelement 26 entspannt.

Mit zunehmendem Standweg verschleißt jedoch das neue Schneidelement 21, da es durch den Bearbeitungsvorgang des Zerspanens Material verliert.

In Figur 3c ist der Mittelabschnitt 25 des Werkstücks 20 nach Schnitt B-B dargestellt. Das Schneidelement 21 ist bereits verschlissen, weshalb das Schneidelement 21 nicht mehr die Spanungsdicke h des Materials des Werkstücks 20 abtragen kann, weil sich durch den Verschleiß des Schneidelement 21 die Schneideebene 30 um eine Höhe H hin zu einer neuen Schneideebene 34 verlagert hat, wobei die Höhe H der Länge entspricht, die das neue Schneidelement 21 durch Verschleiß verloren hat. Deshalb wird das Material des Werkstücks 20 nicht mehr von der Schneideebene 34, sondern von der neuen Schneideebene 34' abgetragen.

Nun gibt es zwei mögliche Szenarien:

### 1. Aktiv kraftgesteuerte Selbstschärfung

Mittels mindestens eines Sensors (nicht gezeigt) des Bearbeitungswerkzeugs 22 wurde festgestellt, dass eine im Bearbeitungswerkzeug 22 hinterlegte Kraft Fₒ' erreicht wurde. Daraufhin erfolgt eine kraftgesteuerte Anpassung der Spanungsdicke, indem das Schneidelement 21 aktiv vom Aktor 26 mit einer Kraft F_{g} gegen die Innenwandung 33 des Werkstücks 20 gepresst wird. Dadurch wird aktiv gegen die Kraft Fₒ' entgegengesteuert.

Vorteilhaft bei der aktiv kraftgesteuerten Anpassung der Spanungsdicke ist, dass der Unterschied zwischen der Spanungsdicke h und der Spanungsdicke h' sehr gering gehalten werden kann, weil das Bearbeitungswerkzeug bereits bei einer geringen Erhöhung der Kraft F_{g} aktiv gegensteuern kann, indem das Bearbeitungswerkzeug das Schneidelement in Richtung der Schneideebene des Werkstücks bewegt. Es kann also sehr schnell auf eine Änderung der Kraft Fₒ reagiert werden.

### 2. Passiv kraftgesteuerte Selbstschärfung

Durch die Kraft Fₒ' findet eine Stauchung des als Federelement ausgebildeten Aktors 26 statt. Die Rückstellkraft des Aktor 26 wirkt der Kraft Fₒ' entgegen.

Auf Sensoren kann in diesem Fall verzichtet werden, weil allein die Kraft Fₒ die Feder zusammendrückt, das heißt staucht, und die Rückstellkraft automatisch der Kraft Fₒ entgegenwirkt.

Damit ist für einen Fachmann klar, dass es keine Rolle spielt, ob das Schneidelement 21 aktiv gegen die Schneideebene 34' gedrückt wird, oder ob allein die Kraft Fₒ' dafür verantwortlich ist, weil in beiden Fällen der Aktor 15 bzw. 26 eine Stauchung erfährt und so bei konstanter Kraft Fₒ' gegen das Werkstück gepresst wird, wodurch die Schneidkante 6 kontinuierlich geschärft wird.

Deshalb kann der als Federelement ausgebildete Aktor 26 in Figur 3c auch zusammengedrückt dargestellt werden. Da die Kraft Fₒ' konstant gehalten wird, wird gewährleistet, dass das Schneidelement 21 weiterhin Material vom Werkstück 20 entfernt. Durch die abrasive Wirkung des Materials des Werkstücks 20 wird das Schneidelement 21 dabei kontinuierlich geschärft, und zwar so lange, bis kein Material mehr an dem Schneidelement 21 vorhanden ist, das entfernt werden kann, womit das Schneidelement 21 bzw. die verschlissene Schneidkante 29' des Schneidelement 21 auch nicht mehr geschärft werden können. Dieser Zustand kann ebenfalls mittels des mindestens einen Sensors festgestellt werden. Ist kein Material mehr an dem Schneidelement 21 vorhanden, das entfernt werden kann, so erhöht sich die Kraft Fₒ', weil diese nicht mehr ausgeglichen, das heißt, konstant gehalten werden kann. Diese Erhöhung der Kraft Fₒ' kann durch den Sensor erfasst werden.

Die Bearbeitung des Werkstücks 20 wird sodann eingestellt, und es muss das Schneidelement 21 durch ein neues Schneidelement ausgetauscht werden.

In den Figuren 3a bis 3c ist das Schneidelement 21 über einen als Federelement ausgebildeten Aktor 26 nachgiebig in dem Bearbeitungswerkzeug 22 angebracht. Aktor 26 und Schneidelement 21 bilden somit eine nachgiebig gelagerte Anordnung.

Auch ist möglich, dass das Schneidelement 21 nicht an einem Federelement, sondern an einem Kolben nachgiebig in dem Bearbeitungswerkzeug 22 angeordnet ist, so dass das Schneidelement 21 zusammen mit dem Kolben als Aktor eine nachgiebig gelagerte Anordnung bilden. Dazu kann der Kolben mithilfe eines Mediums, zum Beispiel Kühlmittelschmierstoff oder Druckluft, in dem Bearbeitungswerkzeug bewegt werden. Dies ist jedoch nicht dargestellt.

Deshalb ist für einen Fachmann klar, dass es keine Rolle spielt, wie der Aktor aufgebaut ist, solange das Schneidelement über den Aktor nachgiebig in dem Bearbeitungswerkzeug angeordnet ist. Die kraftgesteuerte Anpassung der Spanungsdicke kann somit entweder aktiv durch das Bearbeitungswerkzeug erfolgen, nämlich indem das Bearbeitungswerkzeug das Schneidelement gegen die Schneideebene des Werkstücks drückt, oder passiv durch die Kraft Fₒ, die die Schneideebene gegen das Schneidelement drückt. In beiden Fällen erfolgt eine kraftgesteuerte Selbstschärfung des Schneidelements, weil das Schneidelement stetig Material verliert und dadurch geschärft wird.

Allgemein formuliert, erfolgt die Selbstschärfung durch eine Relativbewegung der Schneideebene parallel zum Schnittgeschwindigkeitsvektor und damit auch parallel zur Schneidkante des Schneidelements. Oder anders formuliert: es erfolgt eine Relativbewegung der Schneidkante des Schneidelements parallel zur Schneideebene. So ist nämlich denkbar, dass nur das Werkstück bei feststehendem Bearbeitungswerkzeug bewegt wird (siehe Bewegungspfeil 14 in Figur 2) oder aber, dass das Bearbeitungswerkzeug bewegt wird, wobei das Werkstück sich nicht bewegt.

In den oben beschriebenen Ausführungsbeispielen wird ein Bearbeitungswerkzeug exemplarisch mit nur einem Schneidelement beschrieben. Für einen Fachmann ist offenkundig, dass bei einem Bearbeitungswerkzeug mit mehreren Schneidelementen jedes dieser Schneidelemente nachgiebig gelagert ist. Dadurch ist es möglich, dass jedes dieser Schneidelemente nach deren Verschleiß ab einer bestimmten Kraft Fₒ', wobei Fₒ' (bei verschlissenem Schneidelement) kleiner ist als Fₒ (bei einem neuen, nicht verschlissenen Schneidelement), weiterhin Material vom Werkstück abträgt.

Dadurch, dass stetig Material bei der konstanten Kraft Fₒ' vom Werkstück entfernt wird, werden die Schneidkanten der Schneidelemente wegen der abrasiven Wirkung des Werkstücks automatisch geschärft.

Da die Schneidkante im unteren Abschnitt des Schneidelements angeordnet ist, ist für einen Fachmann klar, dass durch die abrasive Wirkung des Werkstücks nicht nur die Schneidkante, sondern der gesamte untere Abschnitt des Schneidelements geschärft wird. Unter einem Werkstück ist jedes Bauteil zu verstehen, das mit einem Bearbeitungswerkzeug bearbeitet werden kann.

### Bezugszeichenliste

- 1: Werkstück
- 2: Bearbeitungswerkzeug
- 3: Schneidelement
- 3': Untere Abschnitt des Schneidelements 3
- 4: Bearbeitungsrichtung
- 5: Schneideebene
- 5': Neue, um eine Höhe H verlagerte, Schneideebene
- 6: Schneidkante
- 6': Verschlissene Schneidkante 6
- 7: Span
- 8: Spanfläche
- 9: Werkzeugbezugsebene
- 10: Spanwinkel
- 11: Keilwinkel
- 12: Freifläche
- 13: Freiwinkel
- 14: Bewegungspfeil
- 15: Aktor
- 16: ---
- 17: ---
- 18: ---
- 19: ---
- 20: Werkstück
- 21: Schneidelement
- 22: Bearbeitungswerkzeug
- 23: Bearbeitungsrichtung
- 24, 25: Abschnitte des Werkstücks 20
- 26: Aktor
- 27: Inneres des Werkstücks 20
- 28: Drehrichtung des Bearbeitungswerkzeugs 22
- 29: Schneidkante
- 29': Verschlissene Schneidkante 29
- 30: Schneideebene
- 31: Span
- 32: Material
- 33: Innenwandung
- 34: Neue, um eine Höhe H verlagerte, Schneideebene

## Patentansprüche

1. Verfahren zur kraftgesteuerten Selbstschärfung mindestens eines Schneidelements (3, 21) eines Bearbeitungswerkzeugs (2, 22), wobei das mindestens eine Schneidelement (3, 21) über ein Aktor (15, 26) nachgiebig in dem Bearbeitungswerkzeug (2, 22) angeordnet ist, umfassend folgende aufeinanderfolgende Schritte:
1.1 Es wird ein zu bearbeitendes Werkstück (1, 20) sowie ein Bearbeitungswerkzeug (2, 22) bereitgestellt, wobei das Bearbeitungswerkzeug (2, 22) mindestens ein Schneidelement (3, 21) mit einer Schneidkante (6, 29) aufweist;
1.2 mit dem Bearbeitungswerkzeug (2, 22) wird das Werkstück (1, 20) bearbeitet, wobei mit der Schneidkante (6, 29) des mindestens einen Schneidelements (3, 21) Material mit einer Spanungsdicke h entfernt wird, indem die Schneidkante (6, 29) entlang einer Schneideebene (5, 30) des Werkstücks (1, 20) geführt wird, wobei orthogonal zur Schnittgeschwindigkeitsvektor (vc) der Schneidkante (6, 29) eine Kraft (Fo) wirkt;
1.3 die Schneidkante (6, 29) verschleißt, wobei mit dem Verschleiß der Schneidkante (6, 29) die Kraft (Fₒ) orthogonal zur Schneidkante (6, 29) bis zu einer Kraft (Fₒ') zunimmt, wodurch eine Spanungsdicke (h) bis auf eine Spanungsdicke (h') verringert wird und eine neue Schneideebene (5', 34) erhalten wird;
1.4 mit Erreichen der Kraft (Fₒ') wird eine verschlissene Schneidkante (6, 29) erhalten, die entlang der neuen Schneideebene (5', 34) geführt wird, wobei eine Relativbewegung der Schneidkante (6, 29) des Schneidelements (3, 21) parallel zur neuen Schneideebene (5', 34) des Werkstücks (1, 20) erfolgt, wodurch das Schneidelement (5, 21) weiterhin auf die neue Schneideebene (5', 34) gepresst wird und die Kraft (Fₒ') konstant gehalten wird;
1.5 das Werkstück (1, 20) wird bei konstanter Kraft (Fₒ') weiter zerspant, wodurch Material mit einer Spanungsdicke (h') entfernt wird und wodurch durch eine abrasive Wirkung des Materials des Werkstücks (1, 20) das Schneidelement (3, 21) stetig geschärft wird.

2. Verfahren nach Patentanspruch 1, **dadurch gekennzeichnet, dass** durch mindestens einen Sensor das Bearbeitungswerkzeug (2, 22) in Schritt 1.3 erfasst wird, ob die Kraft (Fₒ') erreicht ist und bei Erreichen der Kraft (Fₒ') das Bearbeitungswerkzeug (2, 22) das Schneidelement (3, 21) mit einer Kraft (F_{g}) gegen die Schneideebene (5, 30) des Werkstücks (1, 20) presst.

3. Verfahren nach Patentanspruch 2, **dadurch gekennzeichnet, dass** nach dem Schritt 1.1 die Kraft (Fₒ') im Bearbeitungswerkzeug (2, 22) hinterlegt wird.

4. Verfahren nach Patentanspruch 1, **dadurch gekennzeichnet, dass** durch das stetige Schärfen des Schneidelements (3, 21) die Spanungsdicke (h') so lange konstant gehalten wird, bis das Schneidelement (3, 21) nicht mehr geschärft werden kann.

5. Bearbeitungswerkzeug (2, 22) zur Durchführung des Verfahrens nach den Patentansprüchen 1 bis 4.

6. Bearbeitungswerkzeug (2, 22) nach Patentanspruch 5, **dadurch gekennzeichnet, dass** das Schneidelement (3, 21) mit einem
Aktor (15, 26) verbunden ist, wodurch das Schneidelement (3, 21) nachgiebig in dem Bearbeitungswerkzeug (2, 22) gelagert ist
